# EUROPÄISCHE PATENTANMELDUNG

(11) **EP 4 502 335 A1**
(43) Veröffentlichungstag der Anmeldung: **05.02.2025**
(21) Anmeldenummer: 24191240.1
(22) Anmeldetag: 26.07.2024
(51) Int. Cl.: E06B 9/40, E06B 9/50

(54) **LAGER ZUM LAGERN DER WICKELWELLE EINER VERSCHATTUNGSANLAGE UND VERSCHATTUNGSANLAGE MIT EINEM SOLCHEN LAGER**

(30) Priorität: 01.08.2023 DE 102023120455
(71) Anmelder: Hunter Douglas Industries Switzerland GmbH, 6006 Luzern (CH)
(72) Erfinder: Vangberg-Brinkmann, Katharina, 27612 Loxstedt (DE)
(74) Vertreter: Tappe, Udo

(57) **Zusammenfassung**

An einem Lager (11) zum Lagern der Wickelwelle (12) einer Verschattungsanlage (10), insbesondere eines Rollos, mit einem Halter (14) und einem davon ausgehenden langgestreckten Lagerzapfen (18) lässt sich die Wickelwelle (12) auch bei beengten Platzverhältnissen dadurch einfach mit geringem Beschädigungsrisiko Montieren und Demontieren, dass der Lagerzapfen (18) einen schmaleren Abstandshalter (20) und einen mit dem Abstandshalter (20) von dem Halter (14) beabstandeten breiteren Lagerkopf (21) hat

## Beschreibung

Die Erfindung betrifft ein Lager zum Lagern der Wickelwelle einer Verschattungsanlage, insbesondere eines Rollos, mit einem Halter und einem davon ausgehenden langgestreckten Lagerzapfen. Außerdem betrifft die Erfindung eine Verschattungsanlage mit einem solchen Lager.

Die Lagerzapfen der Lager für Wickelwellen von Verschattungsanlagen, insbesondere Rollos, sind üblicherweise zylindrisch ausgebildet. Zur Montage werden die Wickelwellen mit Ihren den Lagerzapfen entsprechenden ebenfalls meist zylindrischen Lageraufnahmen auf diese zylindrischen Lagerzapfen aufgeschoben und zur Demontage von diesen wieder abgezogen. Dabei darf nur ein geringer Winkel zwischen Lagerzapfen und Lageraufnahme auftreten, da sich Lagerzapfen und Lageraufnahme sonst verkanten können. Bei der Demontage besteht sogar das Risiko einer Beschädigung, wenn die Wickelwelle bei der Demontage durch ihr Eigengewicht einseitig stark absackt. Insbesondere wegen des Wunsches nach einem geringen verbleibenden Lichtspalt und dadurch beding der Montage innerhalb einer, insbesondere tiefen, Laibung ergeben sich hier Probleme bei Montage und Demontage, da wegen des verhältnismäßig geringen verbleibenden Platzes gerade bei tiefen Laibungen für die Montage große Schwenkwinkel benötigt werden.

Das der Erfindung zugrunde liegende Problem ist es, ein Lager zum Lagern der Wickelwelle einer Verschattungsanlage, insbesondere eines Rollos, anzugeben, an dem sich die Wickelwelle auch bei beengten Platzverhältnissen einfach und mit geringem Beschädigungsrisiko Montieren und Demontieren lässt.

Das Problem wird bei einem Lager der eingangs genannten Art dadurch gelöst, dass der Lagerzapfen einen schmaleren Abstandshalter und einen mit dem Abstandshalter von dem Halter beabstandeten breiteren Lagerkopf hat. Bei einer Verschattungsanlage der eingangs genannten Art wird das Problem durch ein Lager mit den Erfindungsmerkmalen gelöst.

Auf diese Weise lässt sich die Wickelwelle einer Verschattungsanlage auch bei einem verhältnismäßig großen erforderlichen Schwenkwinkel einfach montieren und insbesondere ohne größere Beschädigungsgefahr demontieren.

Eine Weiterbildung der Erfindung ist dadurch gekennzeichnet, dass der Lagerkopf zumindest abschnittsweise eine runde, insbesondere kreisringförmige, Außenkontur hat. Auf diese Weise ergibt sich ein leichtgängiges und verschleißarmes Lager.

Eine andere Weiterbildung der Erfindung ist dadurch gekennzeichnet, dass der Lagerkopf wulstartig ausgebildet ist, insbesondere kreisringförmig mit teilkreisförmigem Querschnitt oder kugelförmig. Diese Ausgestaltung ist robust und leichtgängig.

Eine andere vorteilhafte Ausgestaltung ist dadurch gekennzeichnet, dass der Lagerkopf kreisscheibenförmig ist, und vorzugsweise vier, insbesondere seitliche, besonders bevorzugt teilkreisförmige, Stege hat, die insbesondere voneinander, insbesondere gleichverteilt, entlang dem Umfang beabstandet sind. Eine solche Ausführungsform ist materialsparend und trotzdem robust und leichtgängig.

Bei der Erfindung ist es außerdem von Vorteil, wenn der Abstandshalter zumindest abschnittsweise eine zylindrische Außenkontur hat, oder, insbesondere vier, Stege aufweist, die eine gemeinsame zylindrische Einhüllende haben. Ein solche Aufbau ist einfach zu realisieren und trotzdem stabil.

Ein anderes Ausführungsbeispiel der Erfindung ist dadurch gekennzeichnet, dass der Abstandshalter an seiner dem Halter zugewandten Basis, insbesondere konisch, erweitert ist. Auf diese Weise wird gewährleistet, dass die Wickelwelle auf Abstand von dem Halter gehalten wird. Dadurch reduziert sich Reibung und Verschleiß.

Eine andere auch unabhängig von der Erfindung denkbare Weiterbildung ist gekennzeichnet durch ein Befestigungsstück zum Befestigen an einer Wand oder Decke, insbesondere einer Laibung, das vorzugsweise einen Tragabschnitt, auf den der Halter aufsteckbar ist, und einen Befestigungsabschnitt zum Befestigen an der Wand oder Decke, insbesondere der Laibung, hat, wobei der Tragabschnitt und/oder der Befestigungsabschnitt vorzugsweise plattenförmig ausgebildet sind. Ein solches Befestigungsstück lässt sich als Blechstanzteil einfach herstellen. Es ist stabil und tragfähig.

Wieder eine andere Weiterbildung der Erfindung ist dadurch gekennzeichnet, dass der Halter auf voneinander abgewandten Seiten, insbesondere einander zugewandte, Nuten zur Aufnahme des Befestigungsstückes, insbesondere dessen Tragabschnitts, hat. Auf diese Weise lässt sich der Halter einfach und stabil auf das Befestigungsstück, insbesondere dessen Tragabschnitt, aufstecken. Dies gilt besonders, wenn das Befestigungsstück, insbesondere dessen Tragabschnitt, plattenförmig ist.

Eine weitere vorteilhafte Ausgestaltung der Erfindung ist dadurch gekennzeichnet, dass der Halter mindestens einen Rasthaken zum Verrasten an einem Rastabschnitt, insbesondere mindestens einer Rastöffnung, des Befestigungsstückes, insbesondere dessen Tragabschnitts, hat, wobei vorzugsweise ein, insbesondere verschiebbarer, Schlitten an dem Halter vorgesehen ist, der insbesondere eine Rampe zum Entrasten des Rasthakens aufweist. Durch diese Verrastung ergibt sich eine einfache und zuverlässige Verbindung, die wegen des Schlittens zur Demontage einfach und beschädigungsfrei wieder gelöst werden kann.

Verschattungsanlage mit einem Lager nach einem der vorhergehenden Ansprüche und mit einer Wickelwelle, wobei die Wickelwelle vorzugsweise eine, insbesondere zylindrische, Lageraufnahme für den Lagerkopf aufweist, wobei die Lageraufnahme besonders bevorzugt einen Anschlag, insbesondere für den Lagerkopf, hat. Die Wickelwelle einer solchen Verschattungsanlage lässt sich wegen der verhältnismäßig großen realisierbaren Schwenkwinkel einfach und ohne das Risiko einer Beschädigung an dem Halter montieren und demontieren. Die Lageraufnahme sollte mit geeignetem Lagerspiel auf den Lagerkopf passen.

Nachfolgend wird ein Ausführungsbeispiel der Erfindung an Hand der Figuren näher erläutert. Es zeigen:
- Fig.1: eine Verschattungsanlage mit einer an einem Lager angeordneten Wickelwelle in einer Draufsicht als ein Ausführungsbeispiel der Erfindung,
- Fig. 2: den Schnitt A-A von Fig. 1,
- Fig. 3: den Halter von Fig. 1 in einer vergrößerten, perspektivischen Darstellung,
- Fig. 4: die Verschattungsanlage in einer Darstellung ähnlich Fig. 1 mit verschwenkter Wickelwelle,
- Fig. 5: den Schnitt B-B von Fig. 4,
- Fig. 6: den Halter von Fig. 1 in einem entrasteten Zustand, und
- Fig. 7: den Halter von Fig. 1 in dem entrasteten Zustand von einem Befestigungsstück weitgehend abgezogen.

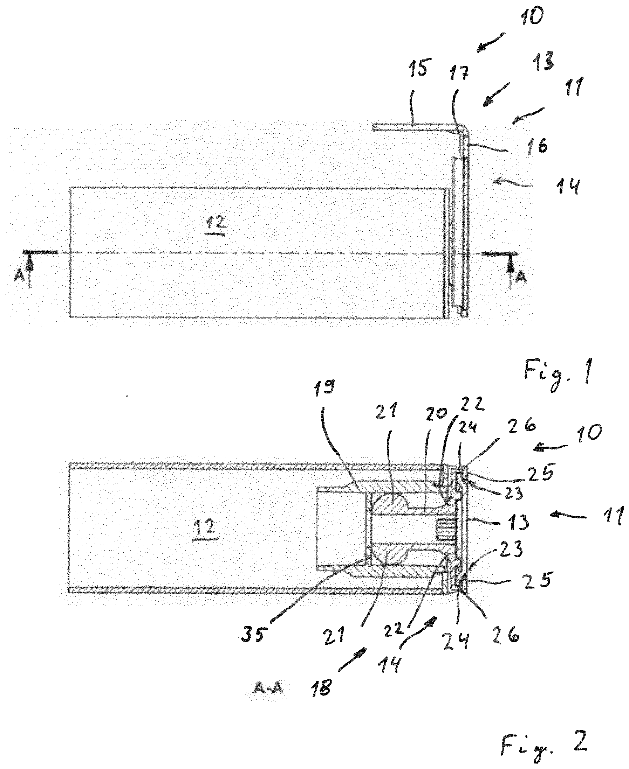

Fig. 1 zeigt eine Verschattungsanlage 10 mit einer an einem Lager 11 angeordneten Wickelwelle 12 in einer Draufsicht als ein Ausführungsbeispiel der Erfindung. Die Verschattungsanlage 10 ist bei dem gezeigten Ausführungsbeispiel ein Rollo, wobei ein Behang der besseren Übersicht wegen nicht in der Figur dargestellt ist.

Das Lager 10 hat bei dem gezeigten Ausführungsbeispiel ein Befestigungsstück 13 und einen Halter 14. Das Befestigungsstück 13 hat einen Befestigungsabschnitt 15 und einen Tragabschnitt 16. Der Befestigungsabschnitt 15 und der Tragabschnitt sind bei dem gezeigten Ausführungsbeispiel plattenartig ausgebildet. Sie sind in etwa rechtwinklig zueinander ausgebildet. Auf diese Weise ist das Befestigungsstück 13 L-förmig als Blechstanzbiegeteil ausgebildet. An dem Übergang von dem Befestigungsabschnitt 15 zu dem Tragabschnitt 16 weist das Befestigungsstück 13 Rippen 17 zur Versteifung auf.

Fig. 2 zeigt den Schnitt A-A von Fig. 1. Wie der Figur zu entnehmen ist, hat der Halter 14 einen Lagerzapfen, der mit einer Lageraufnahme 19 der Wickelwelle 12 zusammenwirkt. Die Lageraufnahme 19 hat einen Anschlag 35 für den Lagerzapfen 18. Der Lagerzapfen 18 hat einen Abstandshalter 20, an dessen von einer nicht in der Figur mit einem Bezugszeichen versehenen Basis des Halters 14 abgewandten Ende ein Lagerkopf 21 angeordnet ist, der breiter ist als der Abstandshalter 20. Der Anschlag 35 ist bei dem gezeigten Ausführungsbeispiels zum Zusammenwirken mit dem Lagerkopf 21 vorgesehen.

Der Abstandshalter ist bei dem gezeigten Ausführungsbeispiel zylindrisch ausgeführt und hat an seinem der Basis zugewandten Ende eine Erweiterung 22. Die Erweiterung 22 erweitert sich zu der Basis hin und von dem Lagerkopf 21 weg. Die Erweiterung 22 ist dabei ähnlich einer Trompete geformt, kann aber auch sich konisch erweiternd ausgebildet sein.

Der Lagerkopf 21 ist wulstartig ausgebildet. Bei dem gezeigten Ausführungsbeispiel hat der Wulst einen halbkreisförmigen Querschnitt. Die Lageraufnahme 19 steckt mit dem erforderlichen Lagerspiel auf dem Lagerkopf 21 und bildet so mit diesem gemeinsam eine Lagerung, im gezeigten Ausführungsbeispiel ein Gleitlager der Wickelwelle 12. Bei einer Wickelbewegung der Wickelwelle 12 sogt die Erweiterung 22 dafür, dass die Lageraufnahme und mit ihr die Wickelwelle 12 von der Basis des Halters 14 auf Abstand gehalten werden.

Der Halter 14 hat auf seiner von dem Lagerkopf 21 abgewandten Seite Nuten 23. Bei dem gezeigten Ausführungsbeispiel hat der Halter zwei Nuten 23, die einander zugewandt sind. Der Halter 14 hat zum Ausbilden der Nuten 23 Distanzelemente 24 an voneinander abgewandten Enden, mit denen Streifen 25 von der Basis des Halters 14 beabstandet sind.

Die Nuten 23 dienen zum Aufnehmen von Flügeln 26 an voneinander abgewandten Seiten des Befestigungsstückes 13. Damit der Halter 14 in einem mit den Nuten 23 auf die Flügel 26 aufgesteckten Zustand nicht oder nur wenig auf seiner von dem Lagerkopf 21 abgewandten Seite über das Befestigungsstück 13 übersteht, sind die Flügel 26 S-förmig versetzt dem Halter 14 zugewandt gebogen.

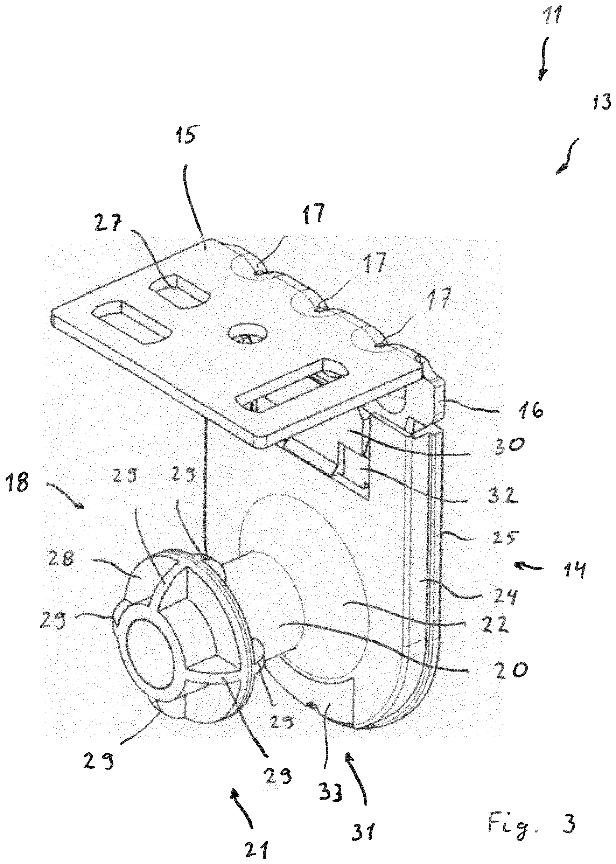

Fig. 3 zeigt den Halter 14 von Fig. 1 in einer vergrößerten, perspektivischen Darstellung. Wie sich der Figur entnehmen lässt, hat das Befestigungsstück 13 drei eingepresste Rippen 17 am Übergang zwischen dem Befestigungsabschnitt 15 und dem Tragabschnitt 16. Dadurch wird der Winkel zwischen dem Befestigungsabschnitt 15 und dem Tragabschnitt 16 stabilisiert. Außerdem weist der Befestigungsabschnitt 15 Öffnungen 27 zum Befestigen des Befestigungsabschnittes 15 mittels Schrauben an einer Wand oder Laibung auf. Insgesamt hat der Befestigungsabschnitt 15 vier Öffnungen 27, von denen zur besseren Übersicht nur eine Öffnung 27 mit einem Bezugszeichen versehen ist. Die Öffnungen 27 sind zur besseren Ausrichtung des Befestigungsstückes 13 teilweise als Langlöcher ausgebildet.

Wie sich Fig. 3 außerdem entnehmen lässt, ist der Lagerkopf 21 bei dem gezeigten Ausführungsbeispiel nicht massiv ausgebildet. Vielmehr hat der Lagerkopf eine Scheibe 28, die das eigentliche Lager bildet, und ausgehend von der Scheibe 28 Stege 29 zur Stabilisierung der Scheibe 28. Bei dem gezeigten Ausführungsbeispiel sind auf jeder Seite vier Stege 29, die jeweils viertelkreisförmig und über den Umfang der Scheibe 28 gleichverteilt angeordnet sind.

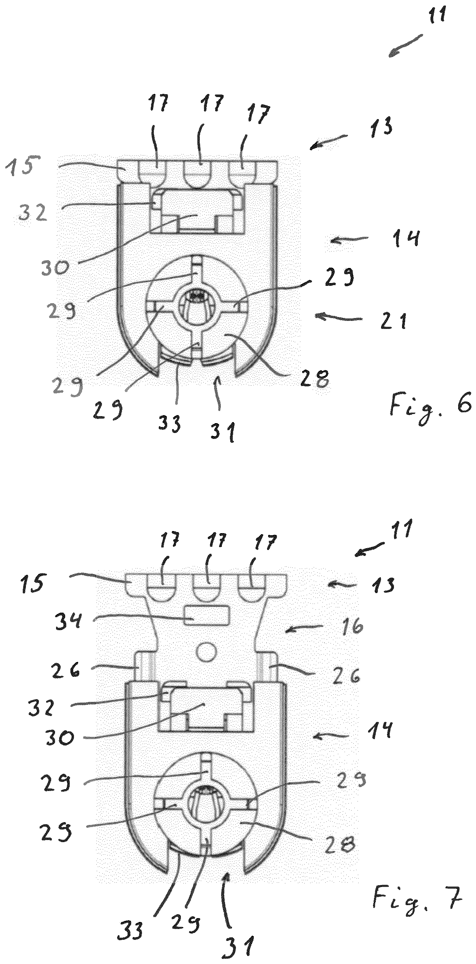

In der Figur ist außerdem zu sehen, dass der Halter 14 einen Rasthaken 30 hat, der in dem gezeigten Zustand in eine nicht in der Figur gezeigte Rastöffnung des Tragabschnittes 16 eingreift, auf die nachfolgend an Hand von Fig. 7 noch näher eingegangen wird. Auf diese Weise ist der Halter 14 mittels des Einrastens des Rasthakens 30 in die Rastöffnung fest an dem Tragabschnitt 16 befestigt und durch dieses Verrasten gegen ein Abziehen gesichert.

In der Figur ist außerdem ein Schlitten 31 an dem Halter 14 dargestellt. Der Schlitten 31 weist an seinem dem Rasthaken 30 zugewandten Ende eine Rampe 32 zum Entrasten des Rasthakens 30 aus der Rastöffnung auf. Am von der Rampe 32 abgewandten Ende hat der Schlitten 31 eine Handhabe 33. Mit der Handhabe 33 kann der Schlitten 31 derart in Richtung des Rasthakens 30 verschoben werden, dass der Rasthaken 30 mit der Rampe 32 von dem Tragabschnitt 16 abgehoben wird, so dass Rasthaken 30 und Rastöffnung entrastet werden und so der Halter 14 wieder von dem Tragabschnitt 16 abgezogen werden kann.

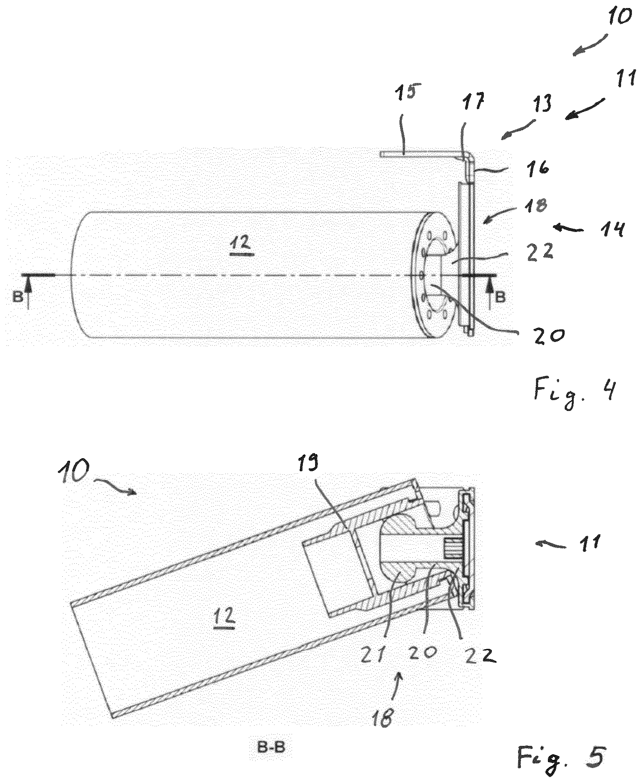

Fig. 4 zeigt die Verschattungsanlage 10 in einer Darstellung ähnlich Fig. 1 mit verschwenkter Wickelwelle 12. Die Wickelwelle 12 ist in der Figur zur Montage oder Demontage vom Betrachter weg in die Papierebene hinein geschwenkt.

Fig. 5 zeigt den Schnitt B-B von Fig. 4. Wie sich der Figur entnehmen lässt, ist die Wickelwelle 12 zur Montage oder Demontage stark gegen den Lagerzapfen 18 geschwenkt. Wegen der pilzförmigen Kontur des Lagerzapfens 18 mit dem breiteren Lagerkopf 21 und dem schmaleren Abstandshalter 20 ist dies über einen verhältnismäßig großen Schwenkbereich möglich. In dem gezeigten Zustand wird die Wickelwelle 12 immer noch sicher von dem Lagerkopf 21 gehalten, während die Lageraufnahme 19 an Ihrem endseitigen Ende an dem Abstandshalter 20 zu liegen kommt. Wie sich der Figur außerdem entnehmen lässt, ist mit der so gestalteten Lagerung mit dem Lagerkopf 21, dem Abstandshalter 20 und der Lageraufnahme 19 auch ein Längenausgleich in weiten Grenzen bei der Montage möglich, solange nur der Lagerkopf 21 in der Lageraufnahme 19 zu liegen kommt.

Fig. 6 zeigt den Halter 14 von Fig. 1 in einem entrasteten Zustand. Der Schlitten 31 ist mittels der Handhabe 33 zu dem Rasthaken hin, in der Figur aufwärts, verschoben. Dadurch hat sich die Rampe 32 unter den Rasthaken 30 geschoben und diesen von der nicht in der Figur gezeigten Rastöffnung abgehoben. Die Rastverbindung zwischen dem Rasthaken 30 und der Rastöffnung wurde auf diese Weise entrastet, so dass der Halter 14 von dem Befestigungsstück 13 in die von dem Befestigungsabschnitt 15 abgewandte Richtung des Tragabschnittes 16, in der Figur nach unten, abgezogen werden kann.

Fig. 7 zeigt den Halter 14 von Fig. 1 in dem entrasteten Zustand von dem Befestigungsstück 13 weitgehend abgezogen. Zu sehen ist in der Figur die Rastöffnung 34 in dem Tragabschnitt 16. In dem gezeigten Zustand kann der Halter 14 vollständig von dem Tragabschnitt 16 abgezogen werden. Um den Halter 14 wieder an dem Befestigungsstück 15 zu montieren, wird der Schlitten 31 mittels nicht in der Figur dargestellter Federmittel oder mittels Betätigen der Handhabe 33 von dem Rasthaken 30 weg, in der Figur nach unten, verschoben, bis die Rampe 32 nicht mehr in Eingriff mit dem Rasthaken 30 steht. Außerdem wird der Halter 14 entlang der in den Nuten 23 geführten Flügel 26 wieder soweit auf den Tragabschnitt 16 geschoben, bis der Rasthaken 30 in die Rastöffnung 34 einrastet. Der Halter 14 ist dann an dem Befestigungsstück 13 verrastet und es kann als nächstes die Wickelwelle 12 auf den Lagerzapfen 18 aufgeschoben werden.

Ein Lager 11 mit den Erfindungsmerkmalen kann auf einer oder auf beiden Seiten der Wickelwelle 12 verwendet werden. Als Material für den Halter 14 kann ein geeignetes Kunstharzmaterial verwendet werden. Bei dem Ausführungsbeispiel ist als Material für den Halter 14 ein Thermoplastmaterial vorgesehen, insbesondere bietet sich die Herstellung als Spritzgussteil an.

### Bezugszeichenliste:

- 10: Verschattungsanlage
- 11: Lager
- 12: Wickelwelle
- 13: Befestigungsstück
- 14: Halter
- 15: Befestigungsabschnitt
- 16: Tragabschnitt
- 17: Rippen
- 18: Lagerzapfen
- 19: Lageraufnahme
- 20: Abstandshalter
- 21: Lagerkopf
- 22: Erweiterung
- 23: Nut
- 24: Distanzelement
- 25: Streifen
- 26: Flügel
- 27: Öffnung
- 28: Scheibe
- 29: Steg
- 30: Rasthaken
- 31: Schlitten
- 32: Rampe
- 33: Handhabe
- 34: Rastöffnung
- 35: Anschlag

## Patentansprüche

1. Lager zum Lagern der Wickelwelle (12) einer Verschattungsanlage (11), insbesondere eines Rollos, mit einem Halter (14) und einem davon ausgehenden langgestreckten Lagerzapfen (18), **dadurch gekennzeichnet, dass** der Lagerzapfen (18) einen schmaleren Abstandshalter (20) und einen mit dem Abstandshalter (20) von dem Halter (14) beabstandeten breiteren Lagerkopf (21) hat.

2. Lager nach Anspruch 1, **dadurch gekennzeichnet, dass** der Lagerkopf (21) zumindest abschnittsweise eine runde, insbesondere kreisringförmige, Außenkontur hat.

3. Lager nach Anspruch 1 oder 2, **dadurch gekennzeichnet, dass** der Lagerkopf (21) wulstartig ausgebildet ist, insbesondere kreisringförmig mit teilkreisförmigem Querschnitt oder kugelförmig.

4. Lager nach einem der vorhergehenden Ansprüche, **dadurch gekennzeichnet, dass** der Lagerkopf (21) kreisscheibenförmig ist, und vorzugsweise vier, insbesondere seitliche, besonders bevorzugt teilkreisförmige, Stege (29) hat, die insbesondere voneinander, insbesondere gleichverteilt, entlang dem Umfang beabstandet sind.

5. Lager nach einem der vorhergehenden Ansprüche, **dadurch gekennzeichnet, dass** der Abstandshalter (20) zumindest abschnittsweise eine zylindrische Außenkontur hat, oder, insbesondere vier, Stege aufweist, die eine gemeinsame zylindrische Einhüllende haben.

6. Lager nach einem der vorhergehenden Ansprüche, **dadurch gekennzeichnet, dass** der Abstandshalter (20) an seiner dem Halter (14) zugewandten Basis, insbesondere konisch, erweitert ist.

7. Lager nach einem der vorhergehenden Ansprüche, **gekennzeichnet durch** ein Befestigungsstück (13) zum Befestigen an einer Wand oder Decke, insbesondere einer Laibung, das vorzugsweise einen Tragabschnitt (16), auf den der Halter (14) aufsteckbar ist, und einen Befestigungsabschnitt (15) zum Befestigen an der Wand oder Decke, insbesondere der Laibung, hat, wobei der Tragabschnitt (16) und/oder der Befestigungsabschnitt (15) vorzugsweise plattenförmig ausgebildet sind.

8. Lager nach einem der vorhergehenden Ansprüche, **dadurch gekennzeichnet, dass** der Halter (14) auf voneinander abgewandten Seiten, insbesondere einander zugewandte, Nuten (23) zur Aufnahme des Befestigungsstückes (13), insbesondere dessen Tragabschnitts (16), hat.

9. Lager nach einem der vorhergehenden Ansprüche, **dadurch gekennzeichnet, dass** der Halter (14) mindestens einen Rasthaken (30) zum Verrasten an einem Rastabschnitt, insbesondere mindestens einer Rastöffnung (34), des Befestigungsstückes (13), insbesondere dessen Tragabschnitts (15), hat, wobei vorzugsweise ein, insbesondere verschiebbarer, Schlitten (31) an dem Halter (14) vorgesehen ist, der insbesondere eine Rampe (32) zum Entrasten des Rasthakens (30) aufweist.

10. Verschattungsanlage mit einem Lager (11) nach einem der vorhergehenden Ansprüche und mit einer Wickelwelle (12), wobei die Wickelwelle (12) vorzugsweise eine, insbesondere zylindrische, Lageraufnahme (19) für den Lagerkopf (21) aufweist, wobei die Lageraufnahme (19) besonders bevorzugt einen Anschlag (35), insbesondere für den Lagerkopf (21), hat.
